# EUROPEAN PATENT APPLICATION

(11) **EP 1 327 896 A1**
(43) Date of publication of application: **16.07.2003**
(21) Application number: 01974347.5
(22) Date of filing: 11.10.2001
(51) Int. Cl.: G02B 6/00, D04C 1/02

(54) **LUMINOUS OPTICAL FIBER CONDUCTORS**

(30) Priority: 16.10.2000 ES 200002470
(71) Applicant: Advanced Fiber Optics, S.L., 08024 Barcelona (ES)
(72) Inventor: JIMENEZ CORTES, Juan, Carlos, E-08024 Barcelona (ES)
(74) Representative: Duran Moya, Luis-Alfonso
(86) International application number: ES0100381
(87) International publication number: WO02033456

(57) **Abstract**

The guide comprises one or more concentric layers of intertwined cable based on optical fibre guides for controlling the transverse losses of light to achieve homogeneous illumination along the guide, the individual guides consisting of polymethylmethacrylate with fluoropolymer sheath.

## Description

The present invention is intended to introduce optical fibre light guides allowing a novel and advantageous effect to be achieved relative to currently known guides.

The light guides according to the present invention are intended, in particular, to make it possible to control the transverse loss of light, allowing the guide to be transformed into an internally illuminated element along its entire length in a controlled manner, allowing a guide with luminosity characteristics throughout to be achieved, allowing signalling applications, the formation of lettering or signs etc. to be effected in a manner very similar to that currently achieved with "neon" tubes.

In particular, the light guides according to the invention are based on PMMA technology, i.e. polymethylmethacrylate, and are composed of a PMMA core with a typical refractive index of 1.495, covered with a film of transparent fluoropolymer with a typical refractive index of 1.402. With this design, on entering the guide the light beam strikes the walls of the cladding and total reflection is produced by the difference in refractive index allowing the light to be displaced through the interior of the guide with minimal losses. However, as the cladding of the PMMA core is not perfect microscopic cracks form allowing a certain amount of light displaced through the interior of the core to escape.

Since the nature of the PMMA core and the concentric film of fluoropolymer cladding are different, their hardness also being different, flexion of the guide causes the appearance of micro-cracks resulting in an escape of light laterally with respect to the guide.

The amount of visible light in the interior of the core is finite since the density of power admissible by the material is also limited, so the homogeneity of the losses and the distance which can be covered before the light becomes exhausted in the interior will depend on the number of micro-cracks existing in the guide.

The present invention is based on the design of an optical guide with a structure of intertwined strands incorporating an architecture specially designed to improve lateral losses of light so as to obtain illumination of the guide along its path.

For this purpose there is predetermined twisting and flexion of the guide for each architecture by controlling the intertwining of the cable to make it possible to intertwine the individual optical fibres without damage to the external film.

As a result of the application of the invention a light guide consisting of a series of intertwined optical guides illuminated along their path is achieved with a high level of homogeneity and over lengths of 60 metres or more.

The light guide is intertwined by applying concentric layers while controlling the lateral tension, twisting and flexion of the individual optical guides to optimise the lateral losses.

Different properties are obtained for the guides where the lateral and longitudinal emission properties combine as a function of the application, depending on the configuration of the successive layers, the number thereof and the presence of a solid, reflective, contrasting, intertwined or linear core.

The resulting multiple architectures have some unique properties with different characteristics for use in applications requiring a large quantity of light in short lengths or, on the other hand, less emission with greater length, with infinite variations.

For the purpose of better understanding some drawings are attached by way of non-limiting example showing embodiments of the light guides according to the present invention.

Fig. 1 and 2 each show exterior sectional views of a light guide produced in accordance with the present invention, with a solid internal core.

Fig. 3 and 4 each show similar views to Fig. 1 and 2 of a light guide without a solid core, in other words, hollow.

Fig. 5 and 6 each show external views of the light guides with and without an internal core respectively.

Fig. 7 shows a structure of light guide with two successive intertwined layers and a solid core.

Fig. 8 shows schematically an external view of a light guide with three successive layers and a solid internal core.

Fig. 9 and 10 show schematically the possibilities of bending the light guide to achieve certain optical effects.

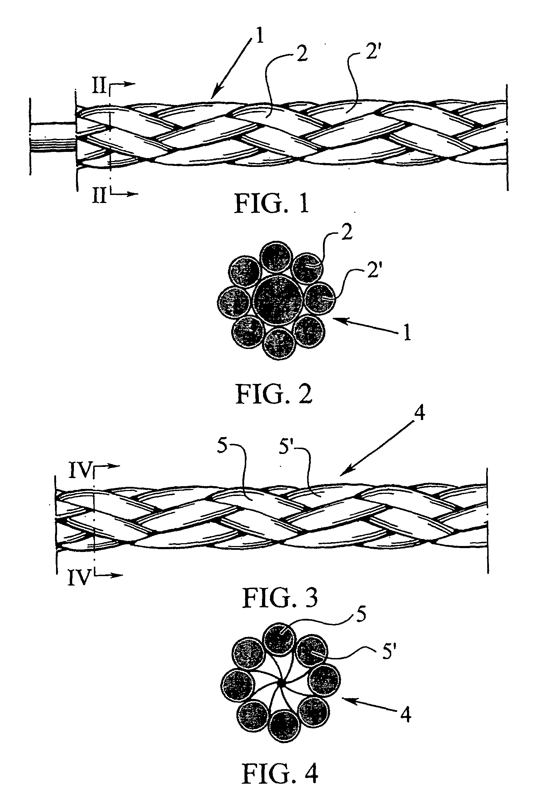

As shown in the figures the light guides according to the present invention are fundamentally based on an assembly or a layer 1 of individual elements 2, 2' etc. in varying number, of light guides in accordance with PMMA technology which are mutually intertwined, i.e. forming a woven cable which can be provided with a reflective, contrasting, solid internal core 3, or may have a hollow structure as in the light guide 4 shown in Fig. 3 and 4 which is formed by various individual guides 5, 5' etc. intertwined to form a light guide with a hollow core.

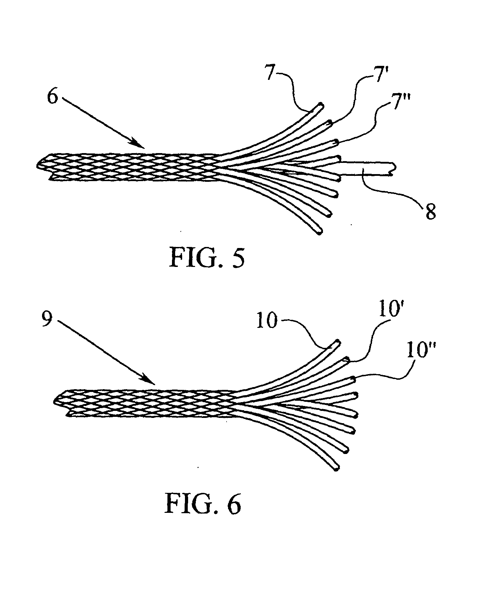

The light guides according to the present invention may be formed by means of multiple successive layers with or without an internal core. Thus, for example, in Fig. 5 a light guide 6 according to the present invention is shown with an intertwined exterior layer formed by the individual guides 7, 7', 7" etc. and a solid internal core 8.

Fig. 6 shows a light guide 9 formed by multiple intertwined guides 10, 10', 10" without an internal core.

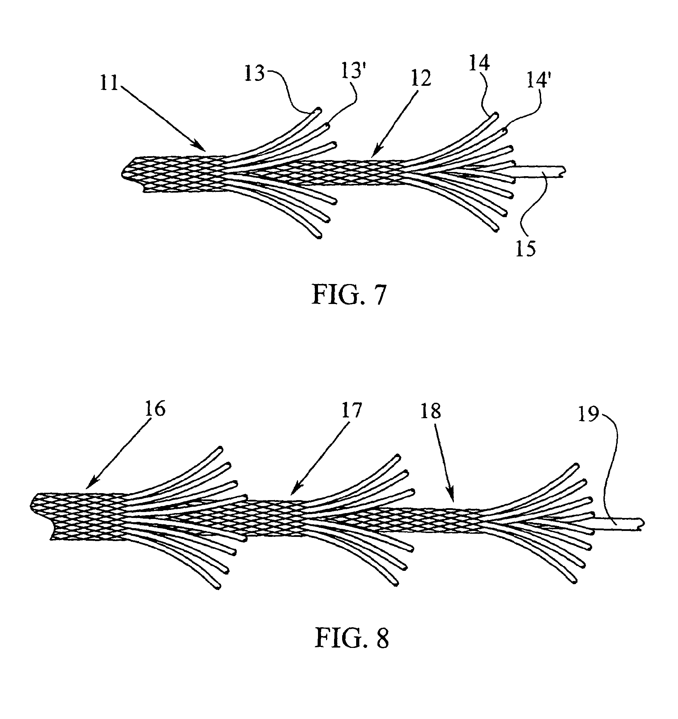

Fig. 7 shows a light guide formed by an external intertwined sheath 11 and an internal intertwined sheath 12 both formed by respective lines of individual guides such as 13, 13' etc. and 14, 14' etc. complemented by a solid core 15.

Fig. 8 shows a variation with three successive layers 16, 17 and 18 with a solid internal core 19, each of the successive layers being formed by means of multiple individual intertwined guides forming successive layers of woven cable each encasing one of the following layers and as a whole encasing the solid core 19.

Optical intertwined guides with uniform illumination along their path with great homogeneity and increased individual lengths can be achieved by controlling the intertwining, the characteristics of the individual guides, the number of layers and the parameters of the intertwining, such as tension, twisting, etc.

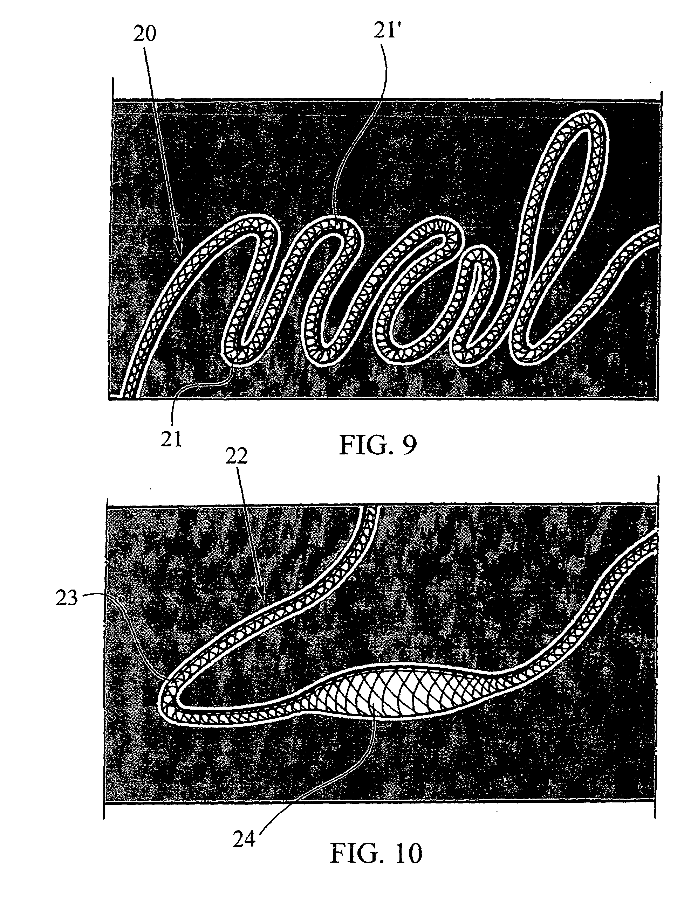

Fig. 9 and 10 each show schematically arrangements of light guides according to the present invention, Fig. 9 showing that the guide 20 forms different successive curvatures such as 21, 21' etc. which could represent a design, letters, numerical characters, etc.

Fig. 10 shows an example of a light guide 22 in which there are also zones 23 with preselected curvatures, intermediate zones 24 with a widened form to achieve the desired light effect.

## Claims

1. Optical fibre light guide, **characterised in that** it comprises one or more concentric layers of intertwined cable comprising optical fibre guides for controlling the transverse losses of light to achieve homogeneous illumination along the guide.

2. Optical fibre light guide according to claim 1, **characterised by** the arrangement of a solid core in the interior of a successive layer of intertwined guides with reflective and contrasting properties.

3. Optical fibre light guide according to claim 1, **characterised in that** the individual guides are made of polymethylmethacrylate with fluoropolymer sheath.
